**Europäisches Patentamt**

**European Patent Office**

**Office européen des brevets**

(19)

(11) Veröffentlichungsnummer : **0 408 100 B1**

(12) ## EUROPÄISCHE PATENTSCHRIFT

(45) Veröffentlichungstag der Patentschrift :
**13.10.93 Patentblatt 93/41**

(51) Int. Cl.$^5$ : **B01D 53/14**

(21) Anmeldenummer : **90201673.2**

(22) Anmeldetag : **23.06.90**

(54) **Verfahren zum Regenerieren einer hochsiedenden, CO2 und H2S enthaltenden Waschlösung.**

(30) Priorität : **11.07.89 DE 3922785**

(43) Veröffentlichungstag der Anmeldung :
**16.01.91 Patentblatt 91/03**

(45) Bekanntmachung des Hinweises auf die
Patenterteilung :
**13.10.93 Patentblatt 93/41**

(84) Benannte Vertragsstaaten :
**AT BE DE ES FR GB GR IT NL**

(56) Entgegenhaltungen :
**EP-A- 0 133 208**
**EP-A- 0 202 600**
**DE-A- 1 904 428**
**DE-A- 3 445 063**
**US-A- 3 196 596**
**US-A- 4 714 480**

(73) Patentinhaber : **METALLGESELLSCHAFT**
**Aktiengesellschaft**
**Postfach 10 15 01, Reuterweg 14**
**D-60015 Frankfurt (DE)**

(72) Erfinder : **Kriebel, Manfred, Dr .**
**Tiroler Strasse 61**
**D-6000 Frankfurt am Main (DE)**
Erfinder : **Grünewald, Gerhard**
**Ph. Wasserburg-Str. 17**
**D-6500 Mainz-Gonsenheim (DE)**
Erfinder : **Fritzsche, Hans-J.**
**Schwarzdornallee 16**
**D-6161 Reichelsheim 2 (DE)**

## Beschreibung

Die Erfindung betrifft ein Verfahren zum Regenerieren einer aus einer Gasreinigung kommenden, hochsiedenden Waschlösung, die einen Siedepunkt bei Atmosphärendruck von über 100°C aufweist, wobei die Waschlösung in der Gasreinigung bei Temperaturen von 5 bis 70°C zumindest mit $CO_2$ und $H_2S$ beladen wurde und nach der Regenerierung in der Gasreinigung wiederverwendet wird, wobei beladene Waschlösung in eine Entspannungszone hinein entspannt, aus der Entspannungszone ein $H_2S$-reiches Entspannungsgas abgeleitet, die Waschlösung aus der Entspannungszone einer Heißregenerierung unterzogen und dabei unterhalb ihrer Siedetemperatur durch gleichzeitiges Strippen mit Inertgas von der restlichen Beladung weitgehend befreit und aus der Heißregenerierung ein inertgashaltiges Gasgemisch und getrennt davon regenerierte Waschlösung abgezogen wird.

Ein solches Verfahren ist aus EP-A-0 133 208 bekannt. Die beim Verfahren der Erfindung zu verwendenden hochsiedenden Waschlösungen enthalten als Hauptkomponente z.B. N-Methylpyrrolidon (NMP) oder Dimethylether von Polyethylenglykol (DMPEG). Der Wassergehalt der Waschlösungen ist vorzugsweise gering und liegt zumeist unter 10 Gew.-%.

Bei dem in der EP-A-0 054 772 beschriebenen Verfahren zum Reinigen eines Gasstroms wird die mit $CO_2$ und $H_2S$ beladene niedrigsiedende Waschlösung über eine Entspannungszone zu einer Reabsorptionszone und dann zur Heißregenerierung geführt. In der Reabsorptionszone wird ein Teil des $CO_2$ über Kopf entfernt und aus der Heißregenerierung wird ein $H_2S$-reiches Gas abgezogen, das man einer Clausanlage zuführt. Die heißregenerierte Waschlösung, deren Hauptbestandteil Methanol ist, wird zurück in die Gaswäsche geleitet. Bei der Verwendung hochsiedender Waschlösungen läßt sich die Regenerierung jedoch nicht so einfach durchführen, wie bei niedrigsiedenden Waschlösungen, z.B. Methanol.

Der Erfindung liegt die Aufgabe zugrunde, die Regenerierung hochsiedender Waschlösungen auf einfache und wirksame Weise durchzuführen und die Waschlösung dabei nicht bis zu ihrem Siedepunkt aufzuheizen. Gleichzeitig soll ein $H_2S$-reiches Gas erzeugt werden, das z.B. für eine Clausanlage geeignet ist. Beim eingangs genannten Verfahren gelingt dies erfindungsgemäß dadurch, daß man die aus der Gaswäsche kommende beladene Waschlösung zunächst in eine Reabsorptionszone leitet, welcher man auch das inertgashaltige Gasgemisch aus der Heißregenerierung aufgibt, wobei durch die Strippwirkung des inertgashaltigen Gasgemisches $CO_2$ aus der beladenen Waschlösung entfernt wird, und daß man die aus der Reabsorptionszone abgezogene Waschlösung, die einen Druck von mindestens 2 bar und eine Temperatur von mindestens 60°C aufweist, in die Entspannungszone hinein entspannt.

In der Reabsorptionszone wird vor allem $CO_2$ aus der beladenen Waschlösung entfernt. Dadurch enthält das $H_2S$-reiche Entspannungsgas, das aus der Entspannungszone kommt, nur noch wenig $CO_2$ und ist deshalb in einer Clausanlage leichter zu verarbeiten. Beim erfindungsgemäßen Verfahren ist es ohne weiteres möglich, aus der Entspannungszone ein Entspannungsgas mit einem $H_2S$-Gehalt von mindestens 50 Vol.-% und vorzugsweise von über 70 Vol.-% abzuziehen, das man einer Clausanlage aufgeben kann. In der Clausanlage wird in an sich bekannter Weise durch Teilverbrennung ein Gemisch aus $H_2S$ und $SO_2$ erzeugt, das man zu Elementarschwefel und Wasser umsetzt.

Ausgestaltungsmöglichkeiten des Verfahrens werden mit Hilfe der Zeichnung erläutert. Es zeigt:

Fig. 1 das Fließschema einer ersten Verfahrensvariante und

Fig. 2 das Fließschema einer zweiten Verfahrensvariante.

Das zu reinigende Gas, das $CO_2$ und $H_2S$ enthält, wird in der Leitung (1) dem unteren Bereich einer Gasreinigung (2) zugeführt, bei der es sich üblicherweise um eine Waschkolonne handelt. Hochsiedende Waschlösung führt man der Gasreinigung (2) durch die Leitung (3) zu und zieht das gereinigte Gas in der Leitung (4) ab. Bei dem zu reinigenden Gas kann es sich z.B. um rohes Synthesegas oder auch um Erdgas handeln, doch ist das Verfahren auf die Behandlung solcher Gase nicht eingeschränkt. In der Gasreinigung (2) herrschen Temperaturen im Bereich von 5 bis 70°C, der Druck liegt zumeist im Bereich von 5 bis 100 bar.

Beladene Waschlösung, die $CO_2$ und $H_2S$ aufgenommen hat, zieht man in der Leitung (6) ab und führt sie zunächst zu einer Reabsorptionszone (7). Auf den Kopf der Reabsorptionszone gibt man durch die Leitung (8) herangeführte regenerierte Waschlösung und dem unteren Bereich der Zone (7) führt man durch die Leitung (9) ein inertgashaltiges Gasgemisch zu, das reich an $H_2S$ ist. Dieses Gasgemisch wirkt in der Reabsorptionszone (7) vor allem als Strippgas, das $CO_2$ aus der in der Leitung (6) herangeführten Waschlösung entfernt. Die in der Leitung (8) herangeführte regenerierte Waschlösung sorgt dafür, daß das in der Leitung (10) abgezogene Gasgemisch praktisch frei von $H_2S$ ist und deshalb entweder in die Atmosphäre abgegeben oder mit dem gewaschenen Gas der Leitung (4) vereinigt werden kann.

Die Waschlösung verläßt die Reabsorptionszone (7) durch die Leitung (12) und wird über die Pumpe (13) zum Erwärmen zunächst durch einen Wärmeaustauscher (14) geführt und gelangt dann durch ein Entspannungsventil (15) in einen Entspannungsbehälter (16). Dadurch, daß man die Waschlösung durch das Entspannungsventil (15) in den Behälter (16) hinein entspannt, wird $H_2S$-reiches Entspannungsgas freigesetzt, das in der Leitung (18) mit einem Druck von 1 bis 6 bar ansteht und einer nicht dargestellten Clausanlage zugeführt werden kann. In der Clausanlage kann man in an sich bekannter Weise Elementarschwefel gewinnen. Für das Clausverfahren ist es vorteilhaft, wenn das zu behandelnde Gas $H_2S$ möglichst konzentriert enthält. Das in der Leitung (18) abgeführte Entspannungsgas weist üblicherweise einen $H_2S$-Gehalt von mindestens 50 Vol.-% und meistens von mindestens 70 Vol.-% auf. Somit ist die in der Leitung (19) aus dem Entspannungsbehälter (16) abgeführte Waschlösung teilweise von $H_2S$ befreit.

Zur vollständigen Regenerierung wird die Waschlösung in der Leitung (19) einer Heißregenerierung (20) aufgegeben und dort durch Anwärmen und Strippen mit einem Inertgas vom restlichen $H_2S$ und $CO_2$ befreit. Das Anwärmen erfolgt in an sich bekannter Weise durch einen Erhitzer (21), zum gleichzeitigen Strippen führt man der Heißregenerierung (20) durch die Leitung (23) Inertgas zu. Bei diesem Strippgas kann es sich z.B. um Stickstoff oder aber auch um einen Teilstrom des Reingases der Leitung (4) handeln.

Ein inertgashaltiges Gasgemisch zieht man aus der Heißregenerierung (20) in der Leitung (25) ab, führt es durch einen Kühler (26) und gibt es in der Leitung (9) der Reabsorptionskolonne (7) auf. Regenerierte Waschlösung gelangt in der Leitung (27) durch die Pumpe (28) zunächst zum Wärmeaustauscher (14), wo eine Kühlung auf Temperaturen von höchstens 70°C erfolgt, dann führt man die Waschlösung über einen weiteren Kühler (29) durch die Leitungen (30) und (8) teilweise dem Reabsorber (7) und vor allem in der Leitung (3) der Gasreinigung (2) zu. Die Gasreinigung (2), die Reabsorptionskolonne (7) und auch die Heißregenerierung (20) enthalten an sich bekannte Füllkörper oder flüssigkeitsdurchlässige Böden, die den Stoffaustausch verstärken.

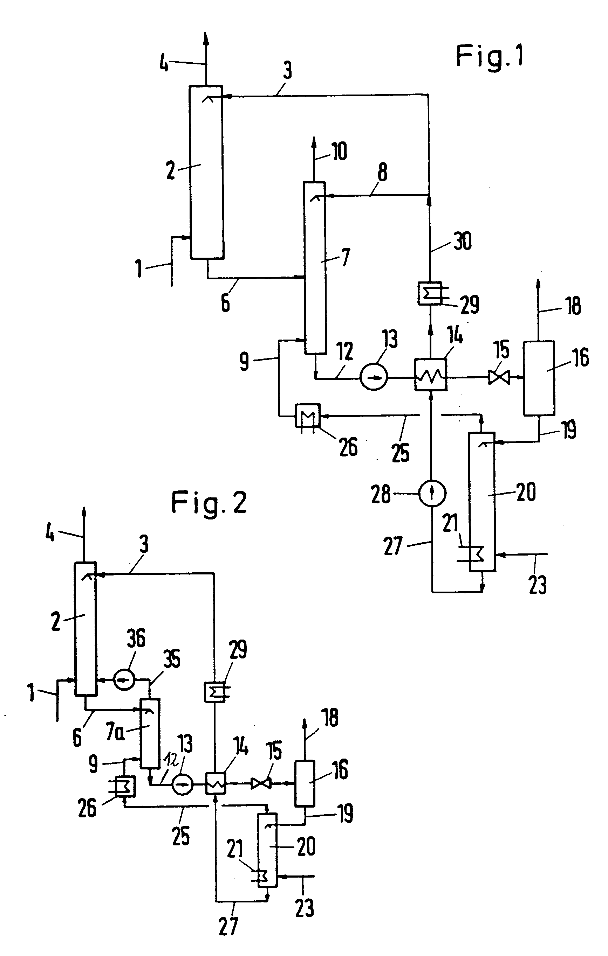

Die Verfahrensvariante der Fig. 2 unterscheidet sich vom Verfahren der Fig. 1 dadurch, daß der Reabsorber (7a) keinen Kopfteil mit Zufuhr regenerierter Waschlösung aufweist. Deshalb enthält das in der Leitung (35) abgezogene Abgas noch gewisse Anteile an $H_2S$ und wird über das Gebläse (36) in die Gasreinigung (2) gegeben. Die übrigen Einzelheiten des Verfahrens der Fig. 2 sind die gleichen wie beim Verfahren der Fig. 1, was durch Verwenden gleicher Bezugsziffern verdeutlicht ist.

Beispiel

Wenn man in einer der Fig. 2 entsprechenden Verfahrensführung arbeitet und der Gaswäsche (2) durch die Leitung (1) pro Stunde 10 000 kmol eines aus Wertgas, $CO_2$ und $H_2S$ bestehenden Gasgemisches zuführt, wobei man mit 300 m$^3$ NMP-Waschlösung wäscht, ergeben sich die in der Tabelle angegebenen, durch Berechnung ermittelten Gasmengen in den verschiedenen Leitungen.

| Leitung | 1 | 4 | 6 | 9 | 12 | 18 | 23 | 25 | 35 |
|---|---|---|---|---|---|---|---|---|---|
| Wertgas | 8260 | 8260 | 18 | – | – | – | – | – | 18 |
| $CO_2$ | 1650 | 1648,5 | 205 | – | 1,5 | 1,5 | – | – | 203,5 |
| $H_2S$ | 90 | – | 133 | 57 | 147 | 90 | – | 57 | 43 |
| $N_2$ | – | 259,5 | – | 260 | 0,5 | 0,5 | 260 | 260 | 259,5 |

Alle Mengen sind in kmol/h berechnet. Als Wertgas kommt z.B. Wasserstoff oder Methan oder aber auch ein Gemisch aus $H_2$ und CO in Frage.

Die Drücke und Temperaturen sind folgende:

| | Druck | Temperatur |
|---|---|---|
| in der Gasreinigung (2) | 30 bar | 25°C |
| in der Leitung (35) | 1,1 bar | 25°C |
| in der Leitung (9) | 1,2 bar | 25°C |
| vor dem Entspannungsventil (15) | 5 bar | 110°C |
| in der Leitung (18) | 2,4 bar | 25°C |
| in der Heißregenerierung (20) | 1,6 bar | 120°C |

Die durch Anwärmen und Strippen heißregenerierte Waschlösung in der Leitung (27) hat eine Temperatur von 120°. Sie wird in der Leitung (3) mit 20°C in die Gasreinigung (2) geführt.

## Patentansprüche

1. Verfahren zum Regenerieren einer aus einer Gasreinigung kommenden, hochsiedenden Waschlösung, die einen Siedepunkt bei Atmosphärendruck von über 100°C aufweist, wobei die Waschlösung in der Gasreinigung bei Temperaturen von 5 bis 70°C zumindest mit $CO_2$ und $H_2S$ beladen wurde und nach der Regenerierung in der Gasreinigung wiederverwendet wird, wobei beladene Waschlösung in eine Entspannungszone hinein entspannt, aus der Entspannungszone ein $H_2S$-reiches Entspannungsgas abgeleitet, die Waschlösung aus der Entspannungszone einer Heißregenerierung unterzogen und dabei unterhalb ihrer Siedetemperatur durch gleichzeitiges Strippen mit Inertgas von der restlichen Beladung weitgehend befreit und aus der Heißregenerierung ein inertgashaltiges Gasgemisch und getrennt davon regenerierte Waschlösung abgezogen wird, dadurch gekennzeichnet, daß man die aus der Gaswäsche kommende beladene Waschlösung zunächst in eine Reabsorptionszone leitet, welcher man auch das inertgashaltige Gasgemisch aus der Heißregenerierung aufgibt, wobei durch die Strippwirkung des inertgashaltigen Gasgemisches $CO_2$ aus der beladenen Waschlösung entfernt wird, und daß man die aus der Reabsorptionszone abgezogene Waschlösung, die einen Druck von mindestens 2 bar und eine Temperatur von mindestens 60°C aufweist, in die Entspannungszone hinein entspannt.

2. Verfahren nach Anspruch 1, dadurch gekennzeichnet, daß das $H_2S$-reiche Entspannungsgas in der Entspannungszone einen Druck von 1 bis 6 bar aufweist.

3. Verfahren nach Anspruch 1 oder 2, dadurch gekennzeichnet, daß das aus der Entspannungszone abgezogene Entspannungsgas einen $H_2S$-Gehalt von mindestens 50 Vol.-% aufweist.

4. Verfahren nach Anspruch 1, dadurch gekennzeichnet, daß man einen Teilstrom der regenerierten Waschlösung in die Reabsorptionszone leitet.

5. Verfahren nach Anspruch 1, dadurch gekennzeichnet, daß man aus der Reabsorptionszone abgezogenes Abgas in die Gaswäsche leitet.

6. Verfahren nach Anspruch 1 oder einem der folgenden, dadurch gekennzeichnet, daß man das $H_2S$-reiche Entspannungsgas einer Clausanlage zum Erzeugen von Elementarschwefel aufgibt.

## Claims

1. A method for regenerating a high-boiling washing solution coming from a gas purification process, which solution has a boiling point at atmospheric pressure of above 100°C, the washing solution having been loaded in the gas purification process at least with $CO_2$ and $H_2S$ at temperatures of 5 to 70°C, and being re-used in the gas purification process after regeneration, the laden washing solution being pressure-relieved into a pressure relief zone, an $H_2S$-rich pressure relief gas being withdrawn from the pressure relief zone, the washing solution from the pressure relief zone is subjected to hot regeneration and in so doing is largely freed from the rest of the load below its boiling temperature by simultaneous stripping with inert gas, and a gas mixture containing inert gas and, separately therefrom, regenerated washing solution, are drawn off from the hot regeneration stage,
characterised in that the laden washing solution coming from the gas scrubbing stage is first passed into a reabsorption zone to which the gas mixture containing inert gas from the hot regeneration stage is also charged, wherein $CO_2$ is removed from the laden washing solution by the stripping action of the gas mixture containing inert gas, and that the washing solution removed from the reabsorption zone, which has a pressure of at least 2 bar and a temperature of at least 60°C, is pressure-relieved into the pressure relief zone.

2. A method according to Claim 1, characterised in that the $H_2S$-rich pressure relief gas in the pressure relief zone has a pressure of 1 to 6 bar.

3. A method according to Claim 1 or 2, characterised in that the pressure relief gas removed from the pres-

4

sure relief zone has an $H_2S$ content of at least 50% by volume.

4.  A method according to Claim 1, characterised in that a partial stream of the regenerated washing solution is passed into the reabsorption zone.

5.  A method according to Claim 1, characterised in that waste gas removed from the reabsorption zone is passed into the gas-scrubbing stage.

6.  A method according to Claim 1 or one of the following Claims, characterised in that the $H_2S$-rich pressure relief gas is fed to a Claus plant for generating elemental sulphur.


**Revendications**

1.  Procédé pour la régénération d'une solution de lavage à haut point d'ébullition, provenant d'un lavage de gaz, qui présente un point d'ébullition de plus de 100°C sous la pression atmosphérique, la solution de lavage ayant été chargée au moins de $CO_2$ et $H_2S$ dans le lavage du gaz, à des températures de 5 à 70°C, et étant réutilisée, après la régénération, dans le lavage de gaz, la solution de lavage chargée étant détendue dans une zone de détente, un gaz de détente riche en $H_2S$ étant évacué de la zone de détente, la solution de lavage sortant de la zone de détente étant soumise à une régénération à chaud et étant au cours de celle-ci dans une large mesure séparée de la charge résiduelle, au-dessous de sa température d'ébullition, par entraînement simultané avec un gaz inerte, et un mélange gazeux contenant du gaz inerte et, séparément de celui-ci, la solution de lavage régénérée étant extraits de la régénération à chaud, caractérisé en ce que l'on envoie d'abord la solution de lavage chargée, provenant du laveur de gaz, dans une zone de réabsorption, à laquelle on envoie également le mélange gazeux contenant un gaz inerte, provenant de la régénération à chaud, le $CO_2$ provenant de la solution de lavage chargée étant éliminé par l'effet d'entraînement du mélange gazeux contenant un gaz inerte, et part le fait que la solution de lavage extraite de la zone de réabsorption, qui présente une pression d'au moins 2 bars et une température d'au moins 60°C, est détendue dans la zone de détente.

2.  Procédé selon la revendication 1, caractérisé en ce que, dans la zone de détente, le gaz de détente riche en $H_2S$ présente une pression de 1 à 6 bars.

3.  Procédé selon la revendication 1 ou 2, caractérisé en ce que le gaz de détente évacué de la zone de détente présente une teneur en $H_2S$ d'au moins 50 % en volume.

4.  Procédé selon la revendication 1, caractérisé en ce que l'on envoie dans la zone de réabsorption un courant partiel de la solution de lavage régénérée.

5.  Procédé selon la revendication 1, caractérisé en ce que l'on envoie dans le laveur de gaz du gaz rejeté évacué de la zone de réabsorption.

6.  Procédé selon la revendication 1 ou l'une des suivantes, caractérisé en ce que, pour la production de soufre élémentaire, on envoie à une unité de Claus le gaz de détente riche en $H_2S$.

Fig.1

Fig.2